(19) **Europäisches Patentamt**
**European Patent Office**
**Office européen des brevets**

(11) **EP 4 463 373 B1**

(12) **FASCICULE DE BREVET EUROPEEN**

(45) Date de publication et mention
de la délivrance du brevet:
**03.12.2025 Bulletin 2025/49**

(21) Numéro de dépôt: **23703086.1**

(22) Date de dépôt: **10.01.2023**

(51) Classification Internationale des Brevets (IPC):
**B64C 1/14** *(2006.01)*

(52) Classification Coopérative des Brevets (CPC):
**B64C 1/14; B64C 1/1438**

(86) Numéro de dépôt international:
**PCT/FR2023/050034**

(87) Numéro de publication internationale:
**WO 2023/135388 (20.07.2023 Gazette 2023/29)**

(54) **SYSTÈME DE CONTRÔLE DE LA VITESSE DE DÉPLACEMENT D'UNE PORTE COULISSANTE ET AÉRONEF ASSOCIÉ**

SYSTEM ZUR STEUERUNG DER ÖFFNUNGSGESCHWINDIGKEIT EINER SCHIEBETÜR UND DAMIT AUSGESTATTETES FLUGZEUG

SYSTEM FOR CONTROLLING THE OPENING VELOCITY OF A SLIDING DOOR AND ASSOCIATED AIRCRAFT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **12.01.2022 FR 2200233**

(43) Date de publication de la demande:
**20.11.2024 Bulletin 2024/47**

(73) Titulaire: **Safran Electronics & Defense**
**75015 Paris (FR)**

(72) Inventeurs:
• **HORS, Daniel**
**77550 MOISSY-CRAMAYEL (FR)**
• **BELLIER, Aurélien**
**77550 MOISSY-CRAMAYEL (FR)**

(74) Mandataire: **Casalonga**
**Casalonga & Partners**
**Bayerstraße 71/73**
**80335 München (DE)**

(56) Documents cités:
**EP-A1- 3 747 760    WO-A1-2022/002646**
**US-A1- 2019 119 966**

## Description

### Domaine technique de l'invention

L'invention concerne les systèmes d'ouverture de portes coulissantes d'aéronef, et plus particulièrement les systèmes de contrôle de la vitesse de déplacement de portes coulissantes d'aéronefs et des aéronefs équipés d'au moins un tel système.

### Etat de la technique antérieure

Généralement, un aéronef comprend une porte coulissante latérale prévue pour s'ouvrir en cours de vol par exemple lors d'un parachutage ou lors d'un hélitreuillage, lorsque l'aéronef est un hélicoptère.

Lors de son ouverture, la porte coulissante est soumise à des forces aérodynamiques pouvant générer des vitesses importantes d'ouverture de la porte.

Les forces aérodynamiques appliquées sur la porte coulissante sont proportionnelles au carré de la vitesse de vol de l'aéronef.

Généralement, un hélicoptère est équipé de vérins amortisseurs de fin de course permettant d'amortir le choc généré par la porte coulissante arrivant en butée, préservant ainsi la structure de l'hélicoptère.

Cependant, de tels vérins ne permettent pas de contrôler la vitesse de la porte coulissante lors de sa course, notamment aux vitesses élevées de vol de l'hélicoptère.

Le document FR3072707 divulgue un enrouleur pour ralentir la fermeture d'une porte coulissante comportant un tambour et un moyen de rembobinage relié au tambour.

L'enrouleur comporte en outre une sangle reliée à la porte coulissante et un frein centrifuge comportant des composants mécaniques.

Le frein centrifuge comporte des masselottes mobiles radialement sur le tambour par des ressorts et frottant sur une surface métallique.

Le couple de freinage généré par l'enrouleur suit une loi de proportionnelle au carré de la vitesse de sorte qu'il n'est pas possible d'implémenter une loi variable afin de moduler l'amortissement selon la vitesse de la porte.

En outre, la vitesse de la porte coulissante est ralentie aussi pour de faibles vitesses.

De plus, l'implémentation de composants mécaniques frottant l'un sur l'autre entraîne une usure desdits composants.

Les composants mécaniques sont en outre sensibles à des variables environnementales, par exemple la température, l'humidité, les vibrations, de sorte que la valeur du couple de freinage fluctue selon l'état d'usure des composants et des variables environnementales.

On pourra également se référer au document EP3747760 qui divulgue un dispositif de commande pour contrôler la vitesse d'ouverture d'une porte coulissante lorsque la porte a atteint une vitesse prédéterminée d'ouverture de porte.

Le dispositif comprend un arbre d'enroulement relié à une courroie et un frein électromagnétique à courants de Foucault pour réduire la vitesse de rotation de l'arbre d'enroulement.

Le frein électromagnétique à courants de Foucault comprend un stator et un rotor qui décrit un mouvement de rotation autour de son axe.

Le stator comprend une bague en cuivre et un paquet de tôles magnétiques, et le rotor comprend un moyeu magnétique comportant des aimants permanents disposés de sorte qu'un pôle nord succède à un pôle sud. La bague en cuivre est soumise à un champ magnétique variable généré par les aimants permanents dont la fréquence est proportionnelle à la vitesse de rotation du rotor.

Le champ magnétique est rebouclé par l'intermédiaire du paquet de tôles du stator. Ce phénomène induit l'apparition de courants de Foucault dans la bague en cuivre qui génèrent un champ magnétique statorique.

Le champ magnétique statorique s'oppose au champ magnétique rotorique généré par les aimants permanents et crée un couple électromagnétique. Le couple est proportionnel à la fréquence du champ magnétique variable et donc à la vitesse de rotation du rotor. L'amortissement magnétique généré par le frein électromagnétique et défini par le rapport du couple électromagnétique sur la vitesse de rotation est invariable selon la vitesse de rotation du rotor.

Selon une autre mode de réalisation, le frein électromagnétique à courant de Foucault comprend un bobinage remplaçant la bague en cuivre permettant de faire varier le coefficient d'amortissement.

Cependant, l'utilisation d'un électroaimant nécessite d'alimenter le dispositif de commande par une source d'alimentation électrique extérieure au dispositif complexifiant l'implantation du dispositif dans l'aéronef.

Le but de l'invention est de pallier tout ou partie de ces inconvénients.

**Exposé de l'invention**

Au vu de ce qui précède, l'invention a pour objet un système de contrôle de la vitesse de déplacement d'une porte coulissante pour aéronef comprenant un dispositif de freinage électromagnétique de la porte comportant un arbre de transmission et des moyens résistifs électromagnétiques, et des moyens de liaison destinés à être reliés à la porte coulissante et coopérant avec l'arbre de transmission de sorte que lorsque la porte coulissante se déplace dans une direction prédéterminée, les moyens de liaison entraînent l'arbre de transmission et les moyens résistifs électromagnétiques appliquent un couple résistif sur l'arbre de transmission pour contrôler la vitesse de déplacement de la porte.

Les moyens résistifs sont autonomes et comportent une loi de commande reliant une première valeur d'amortissement à un premier seuil de vitesse de vitesse de déplacement de la porte, une deuxième valeur d'amortissement à un deuxième seuil de vitesse de vitesse de déplacement de la porte supérieure au premier seuil de vitesse, les moyens résistifs appliquant sur l'arbre de transmission le couple résistif égal à un premier couple égal à la première valeur d'amortissement multipliée par la différence entre la vitesse de déplacement de la porte et le premier seuil de vitesse lorsque la vitesse de déplacement est supérieure au premier seuil de vitesse, et appliquant le couple résistif égal à la somme du premier couple et d'un deuxième couple égal à la deuxième valeur d'amortissement multipliée par la différence entre la vitesse de déplacement de la porte et le deuxième seuil de vitesse lorsque la vitesse de déplacement est supérieure au deuxième seuil de vitesse.

La loi de commande variable définie par les valeurs de couple résistif différentes selon la vitesse de déplacement de la porte permet d'optimiser la vitesse de déplacement de la porte coulissante selon des plages de vitesse de déplacement de la porte.

Les moyens résistifs ne sont pas alimentés par une source d'énergie externe de sorte qu'ils sont autonomes et aisés à implémenter dans l'aéronef car ils ne nécessitent pas d'être raccordés électriquement à des composants de l'aéronef.

De préférence, les moyens résistifs comprennent une génératrice reliée à l'arbre de transmission et configurée pour appliquer le couple résistif, et des moyens de contrôle de la génératrice alimentés par la génératrice et comportant la loi de commande.

Comme les moyens résistifs sont réalisés par des composants électromécaniques (génératrice), ils ne sont pas sensibles aux variables environnementales, par exemple la température, l'humidité, les vibrations, de sorte que la valeur du couple résistif ne fluctue selon les variables environnementales.

Avantageusement, les moyens de contrôle comprennent des moyens de dissipation comprenant un premier moyen résistif électrique, un deuxième moyen résistif électrique, et des moyens de commutation configurés pour relier le premier moyen résistif aux bornes de la génératrice lorsque la tension électrique produite par la génératrice est égale à un premier seuil de tension prédéterminé indicatif de la première valeur de vitesse et pour relier en outre le deuxième moyen résistif aux bornes de la génératrice lorsque la tension électrique produite par la génératrice est égale à un deuxième seuil de tension prédéterminé indicatif de la deuxième valeur de vitesse, le premier moyen résistif étant configuré de sorte que lorsqu'il est relié à la génératrice, la génératrice applique le couple résistif égal à la première valeur de couple sur l'arbre de transmission, et le deuxième moyen résistif étant configuré de sorte que lorsqu'il est relié à la génératrice, la génératrice applique le couple résistif égal à la somme de la première valeur de couple et la deuxième valeur de couple sur l'arbre de transmission.

Avantageusement, les moyens de commutation comprennent un premier interrupteur et des premiers moyens de commande configurés pour fermer le premier interrupteur lorsque la tension aux bornes du premier interrupteur est supérieure ou égale au premier seuil de tension prédéterminé de manière à relier le premier moyen résistif aux bornes de la génératrice, et un deuxième interrupteur et des deuxièmes moyens de commande configurés pour fermer le deuxième interrupteur lorsque la tension aux bornes du deuxième interrupteur est supérieure ou égale au deuxième seuil de tension prédéterminé de manière à relier le deuxième moyen résistif aux bornes de la génératrice lorsque la tension aux bornes du deuxième interrupteur est supérieure ou égale au deuxième seuil de tension prédéterminé.

Avantageusement, les premiers moyens de commande ou les deuxièmes moyens de commande sont en outre configurés pour fermer l'interrupteur associé auxdits moyens lorsque la tension aux bornes dudit interrupteur est supérieure ou égale à un troisième seuil de tension prédéterminé, lesdits moyens de commande comportant un interrupteur de sélection configuré pour commander ledit interrupteur selon le seuil de tension prédéterminé associé auxdits premiers ou deuxièmes moyens ou selon le troisième seuil de tension.

De préférence, la génératrice comprend une machine électrique tournante sans balais ou une machine électrique tournante à balais, le dispositif de freinage comprend en outre un dispositif d'embrayage reliant les moyens de liaison à l'arbre de transmission de sorte que le dispositif d'embrayage est embrayé lorsque la porte se déplace dans la direction prédéterminée et est débrayé lorsque la porte se déplace dans une autre direction.

Avantageusement, si la génératrice comprend une machine électrique tournante sans balais, les moyens de contrôle comprennent en outre un redresseur de tension passif reliant la machine électrique tournante sans balais aux moyens de commutation.

De préférence, si la génératrice comprend une machine électrique tournante à balais, les moyens de contrôle comprennent en outre une diode reliant une borne de ladite machine aux moyens de commutation de sorte que la machine électrique tournante alimente les moyens de contrôle lorsque la porte se déplace dans la direction prédéterminée.

Avantageusement, les moyens de liaison comprennent une sangle, le dispositif de freinage comprenant en outre un ressort de rappel configuré pour enrouler la sangle autour de l'arbre de transmission lorsque le dispositif d'embrayage est débrayé.

Il est également proposé un aéronef comportant une porte coulissante et un système tel que défini précédemment relié à la porte coulissante.

## Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] illustre schématiquement un aéronef comportant une porte coulissante selon l'invention ;
[Fig 2] illustre schématiquement une vue partielle de l'aéronef comportant un système de contrôle de la vitesse d'ouverture de la porte coulissante selon l'invention ;
[Fig 3] illustre schématiquement une vue partielle de l'intérieur de la cabine de l'aéronef selon l'invention ;
[Fig 4] illustre schématiquement un exemple de système de contrôle de la vitesse d'ouverture de la porte coulissante selon l'invention ;
[Fig 5] illustre schématiquement un exemple de réalisation d'un dispositif d'embrayage selon l'invention,
[Fig 6] illustre schématiquement un premier exemple de loi de commande selon l'invention,
[Fig 7] illustre schématiquement un deuxième exemple de loi de commande selon l'invention,
[Fig 8] illustre schématiquement un premier mode de réalisation des moyens résistifs selon l'invention,
[Fig 9] illustre schématiquement un deuxième mode de réalisation des moyens résistifs selon l'invention,
[Fig 10] illustre schématiquement un premier mode de réalisation des moyens de dissipation selon l'invention,
[Fig 11] illustre schématiquement un mode de réalisation de moyens de comparaison, et
[Fig 12] illustre schématiquement un troisième mode de réalisation des moyens résistifs selon l'invention.

## Exposé détaillé d'au moins un mode de réalisation

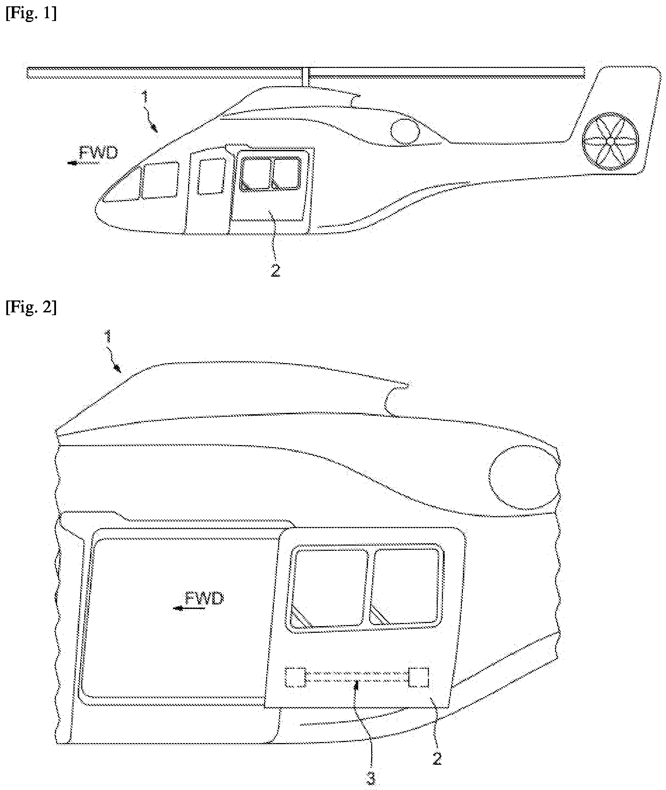

On se réfère à la figure 1 qui illustre schématiquement un aéronef 1 comportant une porte coulissante 2, représentée en position fermée, et prévue pour s'ouvrir en vol, et un système 3 de contrôle de la vitesse de déplacement de la porte coulissante 2 (non représenté).

Le sens de déplacement normal de l'aéronef est représenté par une flèche FWD dirigée vers l'avant. La porte, quant à elle, s'ouvre vers l'arrière et est donc soumise aux forces aérodynamiques engendrées lors du déplacement de l'aéronef 1.

On suppose que le système 3 contrôle la vitesse d'ouverture de la porte coulissante 2.

En variante, le système 3 contrôle la vitesse de fermeture de la porte coulissante 3.

L'aéronef 1 tel que représenté est un hélicoptère.

Bien entendu, l'aéronef 1 peut être tout type d'aéronef comportant une porte coulissante prévue pour s'ouvrir en vol, par exemple un avion comportant une porte coulissante.

La figure 2 illustre une vue partielle de l'aéronef 1, de l'extérieur, la porte coulissante 2 étant ouverte.

Le système 3 de contrôle de la vitesse de déplacement de la porte coulissante 2 (représenté en pointillées) est placé dans la cabine de l'aéronef 1.

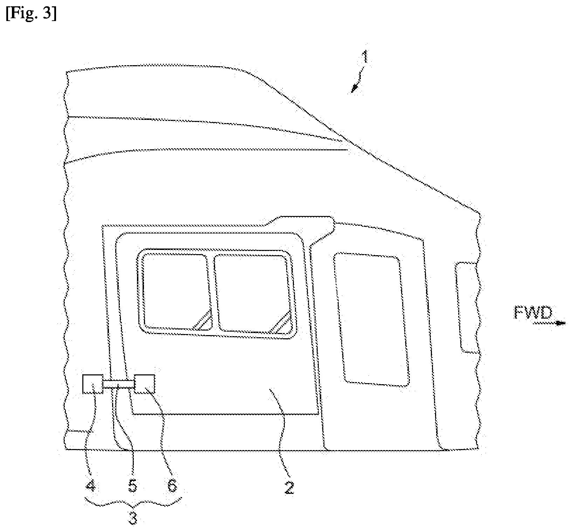

La figure 3 illustre une vue partielle de l'intérieur de la cabine de l'aéronef 1, la porte coulissante 2 étant fermée.

Le système 3 de contrôle comprend un dispositif de freinage 4 électromagnétique pour limiter la vitesse de déplacement de la porte coulissante 2 et monté sur la structure de la cabine de l'aéronef 1, et des moyens de liaison comportant une sangle 5 enroulée dans le dispositif 4 et attachée à un point 6 de fixation de la porte coulissante 2.

Le dispositif de freinage 4 limite ici la vitesse d'ouverture de la porte coulissante 2.

En variante, le dispositif de freinage 4 peut être monté sur la porte coulissante 2, et la sangle 5 est fixée à un point de fixation de la structure de la cabine de l'aéronef 1.

Le système 3 peut être monté indifféremment d'un côté ou de l'autre de l'aéronef 1 par rapport à un axe de symétrie longitudinal de l'aéronef 1, suivant la position de la porte.

Lorsque la porte coulissante 2 s'ouvre, la sangle 5 se déploie en se déroulant et s'allonge sous l'effet de la translation de la porte coulissante 2.

Selon un autre mode de réalisation, les moyens de liaison comprennent une crémaillère fixée sur la porte coulissante 2 et le dispositif 4 comprend un pignon coopérant avec la crémaillère.

Selon encore un autre mode de réalisation, les moyens de liaison comprennent une courroie reliée d'une part au dispositif 4 et, d'autre part, à une poulie solidaire de la porte coulissante 2.

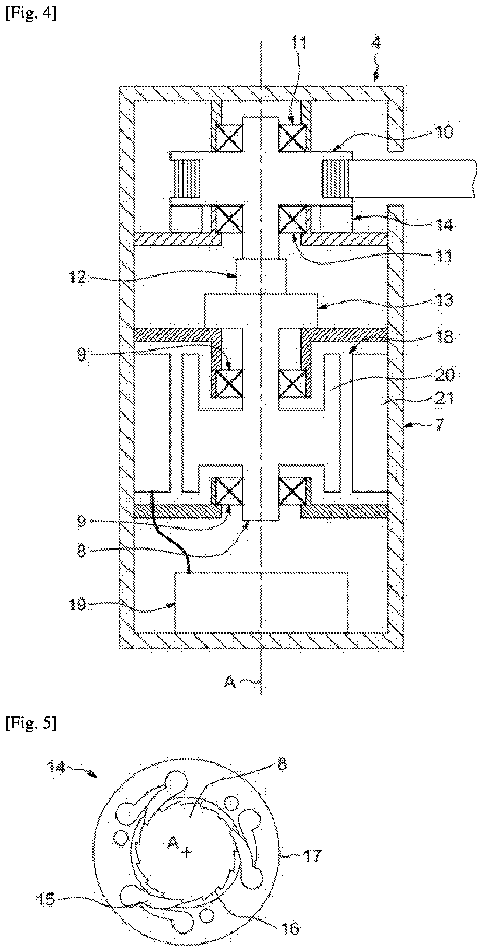

La figure 4 illustre un exemple de réalisation du système 3.

On retrouve le dispositif de freinage 4 et la sangle 5.

Le dispositif de freinage 4 comprend un carter 7 comprenant un arbre de transmission 8 d'axe central maintenu en rotation dans le carter 7 par des roulements 9 par exemple à billes. Bien entendu, les roulements 9 peuvent être d'un autre type, par exemple à rouleaux ou de type paliers lisses.

Le dispositif de freinage 4 comprend en outre une poulie 10 supportant la sangle 5 et maintenue en rotation dans le carter 7 par des roulements 11.

La poulie 10 est reliée à une extrémité de l'arbre de transmission 8 par l'intermédiaire d'un dispositif d'embrayage 12 et d'un réducteur 13 solidaire de l'arbre de transmission 8.

Le dispositif d'embrayage 12 est embrayé lors du déroulement de la sangle 5 de sorte que la sangle 5 entraîne l'arbre de transmission 8, et débrayé lors de l'enroulement de la sangle 5 lorsque la porte coulissante 2 se referme.

Le dispositif d'embrayage 12 comprend par exemple une roue libre 14 telle que représentée à la figure 5.

La roue libre 12 comprend par exemple des cliquets 15 coopérant avec des encoches 16 de sorte que lors du déroulement de la sangle 5, les cliquets 15 sont en prises dans les encoches 16, et de sorte que lors de l'enroulement de la sangle 5 autour l'arbre 8 (fermeture de la porte 2), les cliquets 15 ne sont plus en prises dans les encoches 16.

Les cliquets 15 sont disposés sur un arbre 17 solidaire d'un arbre d'entrée du réducteur 13.

En variante, le dispositif d'embrayage 12 comprend une roue libre à rouleaux.

Le réducteur 13 comprend par exemple un réducteur épicycloïdal et permet d'augmenter la vitesse de rotation de l'arbre de transmission 8.

Le dispositif 4 comprend en outre un ressort de rappel 14 entraînant la poulie 10 pour enrouler la sangle 5 autour de l'arbre de transmission 8 lorsque le dispositif d'embrayage 12 est débrayé.

La sangle 5 se replie lors de la fermeture de la porte coulissante 2.

Le dispositif de freinage 4 comprend des moyens résistifs électromagnétiques appliquant un couple résistif Cr sur l'arbre de transmission 8 pour contrôler la vitesse de déplacement de la porte coulissante 2.

Les moyens résistifs sont autonomes et comportent une loi de commande reliant une première valeur d'amortissement A1 à un premier seuil de vitesse V1 de vitesse de déplacement Vp de la porte 2, une deuxième valeur d'amortissement A2 à un deuxième seuil de vitesse V2 de vitesse de déplacement Vp de la porte 2, et une troisième valeur d'amortissement A3 à un troisième seuil de vitesse V3 de vitesse de déplacement Vp de la porte 2.

Le deuxième seuil V2 est supérieur au premier seuil V1 et inférieur au troisième seuil V3.

Les moyens résistifs appliquent sur l'arbre de transmission 8 le couple résistif Cr égal à un premier couple égal C1 à la première valeur d'amortissement A1 multipliée par la différence entre la vitesse de déplacement Vp de la porte 2 et le premier seuil V1 de vitesse lorsque la vitesse de déplacement Vp est supérieure au premier seuil V1 de vitesse.

$$Cr = C1 = A1 \cdot (Vp - V1), Vp > V1 \ (1)$$

Les moyens résistifs appliquent sur l'arbre de transmission 8 le couple résistif Cr égal à la somme du premier couple C1 et d'un deuxième couple C2 égal à la deuxième valeur d'amortissement A2 multipliée par la différence entre la vitesse de déplacement Vp de la porte 2 et le deuxième seuil V2 de vitesse lorsque la vitesse de déplacement Vp est supérieure au deuxième seuil V2 de vitesse.

$$Cr = C1 + C2 = A1 \cdot (Vp - V1) + A2 \cdot (Vp - V2), Vp > V2 \ (2)$$

Les moyens résistifs appliquent sur l'arbre de transmission 8 le couple résistif Cr égal à la somme du premier couple C1, du deuxième couple C2 et d'un troisième couple C3 égal à la troisième valeur d'amortissement A3 multipliée par la différence entre la vitesse de déplacement Vp de la porte 2 et le troisième seuil V3 de vitesse lorsque la vitesse de déplacement Vp est supérieure au troisième seuil V3 de vitesse.

$$Cr = C1 + C2 + C3 = A1 \cdot (Vp - V1) + A2 \cdot (Vp - V2) + A3 \cdot (Vp - V3),$$
$$Vp > V3 \ (3)$$

Les valeurs des seuils de vitesse V1, V2, V3, la première valeur d'amortissement A1, la deuxième valeur d'amortissement A2 et la troisième valeur d'amortissement A3 sont prédéterminées, par exemple à partir d'essais réalisés sur l'aéronef 1.

On suppose par exemple que la deuxième valeur d'amortissement A2 est supérieure à la première valeur d'amortissement A1 et inférieure à la troisième valeur d'amortissement A3.

Bien entendu, les valeurs d'amortissement A1, A2, A3 peuvent être classées différemment.

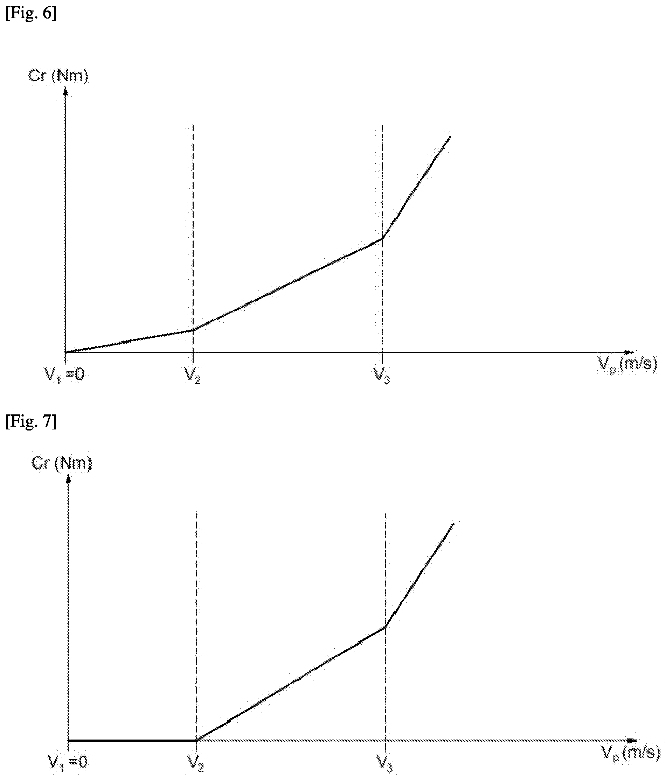

La figure 6 illustre un premier exemple de la loi de commande montrant l'évolution du couple résistif Cr appliqué sur l'arbre de transmission 8 selon la valeur de vitesse de déplacement Vp.

On suppose que le premier seuil de vitesse V1 est par exemple nul de sorte que le dispositif 4 ralentit le déplacement de la porte coulissante 2 dès que la porte 2 commence à se déplacer.

Le dispositif 4 permet de ralentir le déplacement de la porte coulissante 2 jusqu'au premier seuil de vitesse V1, de ralentir encore plus la vitesse de déplacement de la porte coulissante 2 lorsqu'elle dépasse le deuxième seuil de vitesse V2 et encore plus lorsqu'elle dépasse le troisième seuil de vitesse V3, de sorte que la porte coulissante 2 ne dépasse pas une vitesse maximale admissible par des vérins amortisseurs de fin de course de l'aéronef 1.

La première valeur d'amortissement A1 peut être nulle afin de ne pas affecter le fonctionnement de la porte coulissante 2 pour des vitesses de déplacement Vp inférieures au premier seuil V1.

La figure 7 illustre un deuxième exemple de la loi de commande montrant l'évolution du couple résistif Cr appliqué sur l'arbre de transmission selon la valeur de vitesse de déplacement Vp lorsque la première valeur d'amortissement A1 est nulle et le premier seuil V1 est nul.

Le dispositif 4 permet de ralentir le déplacement de la porte coulissante 2 lorsqu'elle dépasse le deuxième seuil de vitesse V2 et encore plus lorsqu'elle dépasse le troisième seuil de vitesse V3.

La loi de commande variable définie par des valeurs de couple résistif Cr différentes selon la vitesse de déplacement de la porte 2 permet d'optimiser la vitesse de déplacement de la porte coulissante 2 selon des plages de vitesse de déplacement de la porte 2 contrairement à une évolution couple-vitesse linéaire.

La loi de commande permet par exemple d'optimiser la vitesse Vp de la porte coulissante 2 à basse vitesse (inférieure au deuxième seuil de vitesse V2, le premier seuil V1 étant nul) en définissant un couple résistif Cr nul (correspondant à une première valeur d'amortissement A1 nulle), un couple résistif Cr dont la valeur est définie par l'équation (1) lorsque la vitesse Vp de déplacement de la porte coulissante 2 est comprise dans une plage de vitesses intermédiaire (entre le deuxième seuil de vitesse V2 et le troisième seuil de vitesse V3) dont la valeur est définie par l'équation (2), et éventuellement d'optimiser la vitesse de déplacement Vp de la porte coulissante 2 à haute vitesse (supérieure au troisième seuil de vitesse V3) en définissant un couple résistif Cr selon l'équation (3).

Comme dans cet exemple la première valeur d'amortissement A1 est nulle, le dispositif 4 ne ralentit par la vitesse de déplacement Vp de la porte 2 de sorte que si des frottements s'exerçant sur la porte 2 augmentent de manière à ralentir la vitesse de déplacement Vp de la porte 2, il n'est pas nécessaire de déconnecter la sangle de la porte 2 pour obtenir une vitesse de déplacement de la porte 2 satisfaisante.

Le deuxième seuil de vitesse V2 est par exemple compris entre 0.5 et 0.7 m/s lorsque le premier seuil de vitesse V1 est nul.

On suppose dans ce qui suit que le premier seuil V1 est nul et que la première valeur d'amortissement A1 est nulle.

En variante, la loi de commande peut définir plus de trois couples associant une valeur d'amortissement à un seuil de vitesse.

En se référant à la figure 4, les moyens résistifs comprennent une génératrice 18 reliée à l'arbre de transmission 8 pour appliquer le couple résistif Cr sur ledit arbre, et des moyens de contrôle 19 de la génératrice 18 alimentés par la génératrice et comportant la loi de commande.

Les moyens de contrôle 19 sont réalisés à partir de semiconducteurs comme détaillé dans ce qui suit et sont fixés sur le carter 7.

La génératrice 18 comprend une machine électrique tournante sans balais ou une machine électrique tournante à balais, fonctionnant en amortissement à courant de Foucault, et comporte un rotor 20 solidaire de l'arbre de transmission 8 et un stator 21 solidaire du carter 7.

Le stator 21 comprend un circuit magnétique comportant un empilement de tôles magnétiques, et le rotor 20 comprend des aimants permanents disposés de sorte qu'un pôle nord succède à un pôle sud.

L'empilement de tôles est soumis à un champ magnétique variable généré par les aimants permanents dont la fréquence est proportionnelle à la vitesse de rotation du rotor.

Le champ magnétique est rebouclé par l'intermédiaire des tôles du stator induisant l'apparition de courants de Foucault dans le circuit magnétique qui génère un champ magnétique statorique.

Le champ magnétique statorique s'oppose au champ magnétique rotorique généré par les aimants permanents et crée un couple électromagnétique égal au couple résistif Cr.

Le couple résistif Cr est proportionnel à la fréquence du champ magnétique variable et donc à la vitesse de rotation du rotor.

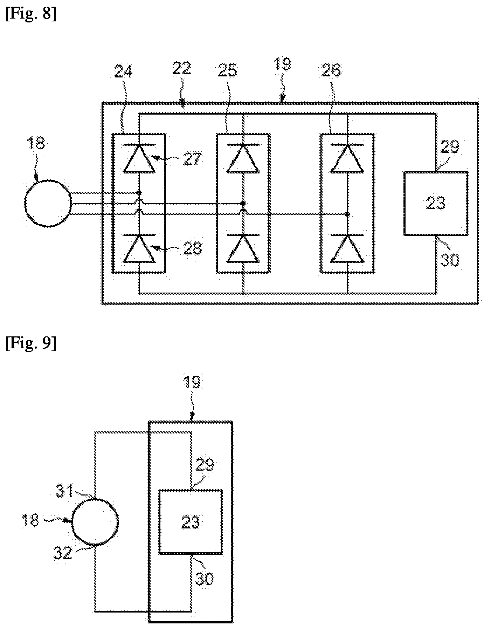

La figure 8 illustre schématiquement un premier mode de réalisation des moyens résistifs.

La génératrice 18 comprend une machine électrique tournante sans balais par exemple du type synchrone triphasée.

Les moyens de contrôle 19 comprennent un redresseur de tension 22 relié à la machine électrique tournante sans balais pour redresser la tension générée par ladite machine lorsqu'elle est entraînée par l'arbre de transmission 8, et des moyens de dissipation 23.

Le redresseur 22 est de type passif et comprend par exemple un pont de diodes comportant trois branches 24, 25, 26 identiques.

Chaque branche 24, 25, 26 comprend deux diodes 27, 28.

La cathode d'une première diode 27 est reliée à une première borne 29 des moyens de dissipation 23, l'anode de la première diode 27 est reliée à la cathode de la deuxième diode 28.

L'anode de la deuxième diode 28 est reliée à une deuxième borne 30 des moyens de dissipation 23.

L'anode de la première diode 27 est en outre reliée à une phase de la machine électrique tournante triphasée de sorte que chaque branche 23, 24, 25 est reliée à une phase différente de ladite machine.

En variante, la machine électrique tournante peut comprendre plus au moins de trois phases, chaque phase étant reliée à une branche différente du redresseur passif 22.

La figure 9 illustre schématiquement un deuxième mode de réalisation des moyens résistifs.

La génératrice 18 comprend une machine électrique à balais.

Les moyens de contrôle 19 comprennent les moyens de dissipation 23.

Une borne positive 31 de la machine électrique à balais est reliée à la première borne 29 des moyens de dissipation 23 et une borne négative 32 de la machine électrique à balais est reliée à la deuxième borne 30 des moyens de dissipation 23.

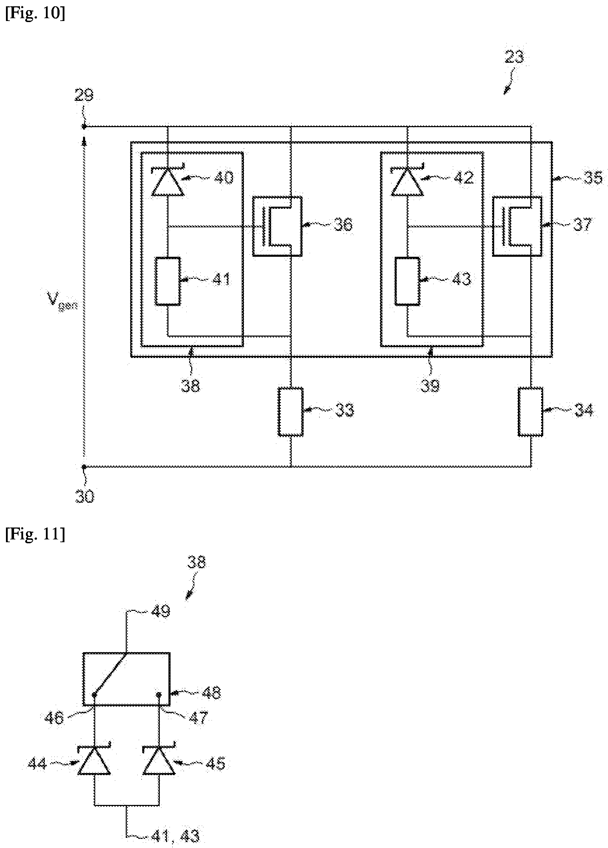

La figure 10 illustre schématiquement un premier mode de réalisation des moyens de dissipation 23.

Les moyens de dissipation 23 comprennent un premier moyen résistif électrique et un deuxième moyen résistif électrique formés par les bobines de la génératrice 18, et par exemple par une première résistance 33 et une deuxième résistance 34.

Les moyens de dissipation 23 comprennent en outre des moyens de commutation 35.

Les moyens de commutation 35 relient le premier moyen résistif aux bornes de la génératrice 18 lorsque la tension électrique Vgen produite par la génératrice 18 est égale à un premier seuil S1 de tension prédéterminé indicatif de la deuxième valeur V2 de vitesse.

Les moyens de commutation 35 relient en outre le deuxième moyen résistif aux bornes de la génératrice 18 lorsque la tension électrique Vgen produite par la génératrice est égale à un deuxième seuil S2 de tension prédéterminé indicatif de la troisième valeur V3 de vitesse.

La relation entre la tension produite par la génératrice 18 et la vitesse de déplacement de la porte coulissante 2 est déterminée à partir des caractéristiques du réducteur 13, de la génératrice 18, et des moyens de liaison.

Le premier moyen résistif est dimensionné de sorte que lorsqu'il est relié à la génératrice 18, la génératrice 18 applique le couple résistif Cr tel que défini par l'équation (2) sur l'arbre de transmission 8.

Le deuxième moyen résistif est dimensionné de sorte que lorsqu'il est relié à la génératrice, la génératrice applique le couple résistif Cr tel que défini par l'équation (3) sur l'arbre de transmission 8.

Le dimensionnement des premier moyen résistif et deuxième moyen résistif prend en compte la résistance des bobines de la génératrice 18.

Les moyens de commutation 35 comprennent par exemple un premier interrupteur 36, un deuxième interrupteur 37, des premiers moyens de commande 38 du premier interrupteur 36, et des deuxièmes moyens de commande 39 du deuxième interrupteur 37.

Le premier interrupteur 36 et le deuxième interrupteur 37 comprennent chacun par exemple un transistor à effet de champ ou un transistor d'un autre type.

En variante, le premier interrupteur 36 et le deuxième interrupteur 37 comprennent chacun un ensemble de transistors par exemple reliés selon un schéma Darlington si la puissance électrique traversant un transistor est susceptible de détériorer ou détruire ledit transistor.

Les drains des transistors des premier interrupteur 36 et deuxième interrupteur 37 sont reliés à la première borne 29.

La source du transistor du premier interrupteur 36 est reliée à une première extrémité de la résistance 33 du premier élément résistif, et la grille dudit transistor est reliée aux premiers moyens de commande 38.

La source du transistor du deuxième interrupteur 37 est reliée à une première extrémité de la résistance 34 du deuxième élément résistif, et la grille dudit transistor est reliée aux deuxièmes moyens de commande 39.

La deuxième extrémité des première et deuxième résistances de commande 40, 41 est reliée à la deuxième borne 30.

Lorsque la tension Vgen produite par la génératrice 18 est égale ou supérieure au premier seuil S1, le transistor du premier interrupteur 36 est passant et relie la résistance 33 aux première et deuxième bornes 29, 30.

Lorsque la tension Vgen produite par la génératrice 18 est égale ou supérieure au deuxième seuil S2, le transistor du deuxième interrupteur 37 est passant et relie la résistance 34 aux première et deuxième bornes 29, 30.

Dès que la tension Vgen produite par la génératrice 18 est inférieure au deuxième seuil S2, le transistor du deuxième interrupteur 37 est ouvert de sorte que la résistance 34 n'est plus reliée aux première et deuxième bornes 29, 30.

Dès que la tension Vgen produite par la génératrice 18 est inférieure au premier seuil S1, le transistor du premier interrupteur 36 est ouvert de sorte que la résistance 33 n'est plus reliée aux première et deuxième bornes 29, 30.

Les premiers moyens de commande 38 ferment le premier interrupteur 36 lorsque la tension aux bornes du premier interrupteur 36 est supérieure ou égale au premier seuil S1 de tension.

Les deuxièmes moyens de commande 39 ferment le deuxième interrupteur 37 lorsque la tension aux bornes du premier interrupteur 37 est supérieure ou égale au deuxième seuil S2 de tension.

Les premiers moyens de commande 38 comprennent des moyens de comparaison de tension comprenant par exemple une première diode Zener 40 ayant une tension de seuil égale au premier seuil S1 de tension et une première résistance de commande 41, et les deuxièmes moyens de commande 39 comprennent des moyens de comparaison de tension comprenant par exemple une deuxième diode Zener 42 ayant une tension de seuil égale au deuxième seuil S2 de tension et une deuxième résistance de commande 43.

La cathode des première et deuxième diodes Zener 40, 42 est reliée à la première borne 29.

L'anode de la première diode Zener 40 est reliée à la grille du transistor du premier interrupteur 36 et à une première extrémité de la première résistance de commande 41.

La deuxième extrémité de la première résistance de commande 41 est reliée à la source du transistor du premier interrupteur 36.

L'anode de la deuxième diode Zener 42 est reliée à la grille du transistor du deuxième interrupteur 37 et à une première extrémité de la deuxième résistance de commande 43.

La deuxième extrémité de la deuxième résistance de commande 43 est reliée à la source du transistor du deuxième interrupteur 37.

Les diodes Zener 38, 39 comparent la tension Vgen produite par la génératrice 18 aux tensions de seuil S1, S2.

En variante, les premier et deuxième moyens résistifs électriques sont formés par les bobines de la génératrice 18 et l'une des première et deuxième résistances.

Selon encore une autre variante, les premier et deuxième moyens résistifs électriques sont formés par les bobines de la génératrice 18, les moyens de dissipation 23 ne comportant pas de première et deuxième résistances (génératrice 18 en court-circuit), la loi de commande étant une loi linéaire simple comportant un seuil de déclenchement égal à la valeur du premier seuil V1 si le premier seuil V1 est de valeur non nulle, et ne comportant pas de seuil de déclenchement dans le cas contraire.

En variante, une résistance est reliée entre les bornes 29, 30 pour créer un couple résistif permanent appliqué sur l'arbre de transmission 8 dès l'ouverture de la porte 2.

Pour des puissances élevées ou des seuils S1, S2 qui ne sont pas égaux aux tensions de seuil des diodes Zener, chaque diode Zener 40, 42 et la résistance de commande 41, 43 associée peuvent être remplacées par un circuit configuré pour relier le premier moyen résistif aux bornes de la génératrice, et pour relier le deuxième moyen résistif aux bornes de la génératrice lorsque les valeurs les seuils de tension S1, S2 sont atteintes.

La figure 11 illustre schématiquement un deuxième mode de réalisation des moyens de commande 38, 39.

Comme l'architecture des moyens de commande 38, 39 est identique, seule est détaillée l'architecture des premiers moyens de commande 38.

Les moyens de comparaison des premiers moyens de commande 38 comprennent une troisième diode Zener 44 ayant une tension de seuil égale au premier seuil S1 et une quatrième diode Zener 45 ayant une troisième tension de seuil égale à un troisième seuil de tension différent du premier seuil S1.

L'anode de chaque diode 44, 45 est reliée à l'une des résistances de commande 41, 43 et la cathode de chacune des diodes est reliée à une entrée différente 46, 47 d'un interrupteur 48 de sélection.

Une sortie 49 de l'interrupteur 48 est reliée à la première borne 29.

L'interrupteur 48 permet de relier l'une ou l'autre des deux diodes 44, 45 afin de modifier aisément le seuil de tension des moyens de comparaison en reliant l'une ou l'autre diode 44, 45 entre la première borne 29 et la résistance de commande 41, 43.

L'interrupteur 48 de sélection permet de commander le premier interrupteur 36 selon le premier seuil S1 de tension ou selon le troisième seuil S3 de tension.

Les moyens de comparaison permettent par exemple de tester aisément différents seuils de tension lors du réglage du système 3 de contrôle monté dans l'aéronef 1 et relié à la porte coulissante 2.

L'interrupteur 48 peut être commandé manuellement ou par un contrôleur.

En variante, les moyens de comparaison peuvent comprendre plus de deux diodes Zener ayant des tensions de seuil différentes reliées en parallèle, l'interrupteur 48 comprenant autant d'entrées que de diodes Zener.

Selon encore une autre variante, les moyens de dissipation 23 peuvent comprendre un panachage des premier et deuxième modes de réalisation des moyens de comparaison de la tension Vgen illustrés aux figures 10 et 11.

Les moyens de dissipation 23 peuvent par exemple comprendre les deux diodes 44, 45 en parallèle reliées à l'interrupteur 48 tel que décrit dans le deuxième mode de réalisation illustré à la figure 11 pour piloter le premier interrupteur 36, et la diode 42 pour piloter le deuxième interrupteur 37.

Le dispositif d'embrayage 12 désaccouple la génératrice 18 de la poulie 10 de sorte qu'elle ne génère pas une tension lors de la fermeture de la porte coulissante 2 susceptible de faire commuter les moyens de commutation pour appliquer le couple résistif Cr sur l'arbre de transmission 8.

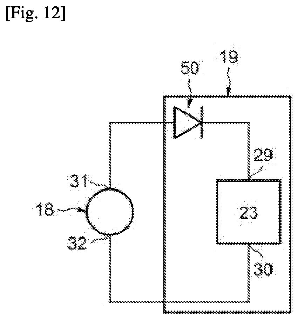

La figure 12 illustre schématiquement un troisième mode de réalisation des moyens résistifs fonctionnant avec ou sans la roue libre 12.

La génératrice 18 comprend la machine électrique à balais.

Comme le courant généré par la machine électrique tournante à balais dépend du sens de la rotation de l'arbre de transmission 8, les moyens de contrôle 19 comprennent les moyens de dissipation 23 et une diode 50 reliée à une borne de ladite machine et aux moyens de commutation de sorte que la machine électrique tournante à balais alimente les moyens de contrôle 19 lorsque la porte coulissante 2 se déplace dans la direction prédéterminée, ici le sens d'ouverture de la porte coulissante 2.

La borne positive 31 de la machine électrique à balais est reliée à l'anode de la diode 50, la cathode de la diode 50 est reliée à la première borne 29 des moyens de dissipation 23, et la borne négative 32 de la machine électrique à balais est reliée à la deuxième borne 30 des moyens de dissipation 23.

Lorsque l'arbre de transmission 8 entraîne la machine électrique tournante à balais dans le sens d'ouverture de la porte coulissante 2, ladite machine délivre un courant sur la borne positive 31 de sorte que la diode 48 est passante et alimente les moyens de dissipation 23.

Lorsque l'arbre de transmission 8 entraîne la machine électrique tournante à balais dans le sens de fermeture de la porte coulissante 2, ladite machine délivre un courant sur la borne négative 32 de sorte que la diode 48 n'est pas passante et n'alimente pas les moyens de dissipation 23.

Les moyens résistifs ne sont pas alimentés par une source d'énergie externe de sorte qu'ils sont autonomes et aisés à implémenter dans l'aéronef 1 car ils ne nécessitent pas d'être raccordés électriquement à des composants de l'aéronef 1.

En outre, lorsque la génératrice 18 comprend une machine tournante sans balais, aucune pièce ne frotte sur une autre de sorte que les moyens résistifs ne sont pas susceptibles de s'user, le dispositif de freinage 4 ne nécessitant pas d'opération de maintenance.

Comme les moyens résistifs sont réalisés par des composants électromécaniques, ils ne sont pas sensibles aux variables environnementales, par exemple la température, l'humidité, les vibrations, de sorte que la valeur du couple résistif Cr ne fluctue pas selon les variables environnementales.

## Revendications

1. Système (3) de contrôle de la vitesse de déplacement d'une porte (2) coulissante pour aéronef (1) comprenant un dispositif de freinage (4) électromagnétique de la porte comportant un arbre (8) de transmission et des moyens résistifs électromagnétiques (18), et des moyens de liaison (5) destinés à être reliés à la porte coulissante et coopérant avec l'arbre de transmission de sorte que lorsque la porte coulissante se déplace dans une direction prédéterminée, les moyens de liaison entraînent l'arbre de transmission et les moyens résistifs électromagnétiques appliquent un couple résistif (Cr) sur l'arbre de transmission pour contrôler la vitesse de déplacement de la porte, les moyens résistifs n'étant pas alimentés par une source d'énergie externe,
   **caractérisé en ce que** les moyens résistifs comportent une loi de commande reliant une première valeur d'amortissement à un premier seuil de vitesse (V1) de vitesse de déplacement de la porte (2), une deuxième valeur d'amortissement à un deuxième seuil de vitesse (V2) de vitesse de déplacement de la porte supérieure au premier seuil (V1) de vitesse, les moyens résistifs appliquant sur l'arbre de transmission le couple résistif (Cr) égal à un premier couple égal à la première valeur d'amortissement multipliée par la différence entre la vitesse de déplacement de la porte et le premier seuil (V1) de vitesse lorsque la vitesse de déplacement est supérieure au premier seuil (V1) de vitesse, et appliquent le couple résistif égal à la somme du premier couple et d'un deuxième couple égal à la deuxième valeur d'amortissement multipliée par la différence entre la vitesse de déplacement de la porte et le deuxième seuil (V2) de vitesse lorsque la vitesse de déplacement est supérieure au deuxième seuil (V2) de vitesse.

2. Système selon la revendication 1, dans lequel les moyens résistifs comprennent une génératrice (18) reliée à l'arbre (8) de transmission et configurée pour appliquer le couple résistif (Cr), et des moyens de contrôle (19) de la génératrice alimentés par la génératrice et comportant la loi de commande.

3. Système selon la revendication 2, dans lequel les moyens de contrôle (19) comprennent des moyens de dissipation (23) comprenant un premier moyen résistif électrique (18, 33), un deuxième moyen résistif électrique (18, 34), et des moyens de commutation (35) configurés pour relier le premier moyen résistif aux bornes de la génératrice (18) lorsque la tension électrique produite par la génératrice est égale à un premier seuil de tension prédéterminé indicatif de la première valeur de vitesse (V1) et pour relier en outre le deuxième moyen résistif aux bornes de la génératrice lorsque la tension électrique produite par la génératrice est égale à un deuxième seuil de tension prédéterminé indicatif de la deuxième valeur de vitesse (V2), le premier moyen résistif étant configuré de sorte que lorsqu'il est relié à la génératrice, la génératrice applique le couple résistif (Cr) égal à la première valeur de couple (C1) sur l'arbre (8) de transmission, et le deuxième moyen résistif étant configuré de sorte que lorsqu'il est relié à la génératrice, la génératrice applique le couple résistif (Cr) sur l'arbre de transmission égal à la somme de la première valeur de couple (C1) et la deuxième valeur de couple (C2).

4. Système selon la revendication 3, dans lequel les moyens de commutation (35) comprennent un premier interrupteur (36) et des premiers moyens de commande (38) configurés pour fermer le premier interrupteur lorsque la tension aux bornes du premier interrupteur est supérieure ou égale au premier seuil de tension prédéterminé de manière à relier le premier moyen résistif (33) aux bornes de la génératrice (18), et un deuxième interrupteur (37) et des deuxièmes moyens de commande (39) configurés pour fermer le deuxième interrupteur lorsque la tension aux bornes du deuxième interrupteur est supérieure ou égale au deuxième seuil de tension prédéterminé de manière à relier le deuxième moyen résistif aux bornes de la génératrice lorsque la tension aux bornes du deuxième interrupteur est supérieure ou égale au deuxième seuil de tension prédéterminé.

5. Système selon la revendication 4, dans lequel au moins les premiers moyens (38) de commande ou les deuxièmes moyens (39) de commande sont en outre configurés pour fermer l'interrupteur (36, 37) associé auxdits moyens lorsque la tension aux bornes dudit interrupteur est supérieure ou égale à un troisième seuil de tension prédéterminé, lesdits moyens de commande comportant un interrupteur de sélection (48) configuré pour commander ledit interrupteur selon le seuil de tension prédéterminé associé auxdits premiers ou deuxièmes moyens ou selon le troisième seuil de tension.

6. Système selon l'une quelconque des revendications 2 à 5, dans lequel la génératrice (18) comprend une machine électrique tournante sans balais ou une machine électrique tournante à balais, le dispositif de freinage (4) comprend en outre un dispositif d'embrayage (12) reliant les moyens de liaison à l'arbre de transmission (8) de sorte que le dispositif d'embrayage est embrayé lorsque la porte (2) se déplace dans la direction prédéterminée et est débrayé lorsque la porte se déplace dans une autre direction.

7. Système selon la revendication 6, dans lequel si la génératrice (18) comprend une machine électrique tournante sans balais, les moyens de contrôle (19) comprennent en outre un redresseur (22) de tension passif reliant la machine électrique tournante sans balais aux moyens de commutation (35).

8. Système selon la revendication 6, dans lequel si la génératrice comprend une machine électrique tournante à balais, les moyens de contrôle (19) comprennent en outre une diode (48) reliant une borne (31) de ladite machine aux moyens de commutation (35) de sorte que la machine électrique tournante alimente les moyens de contrôle lorsque la porte se déplace dans la direction prédéterminée.

9. Système selon l'une quelconque des revendications 6 à 8, dans lequel les moyens de liaison comprennent une sangle (5), le dispositif de freinage (4) comprenant en outre un ressort de rappel (14) configuré pour enrouler la sangle autour de l'arbre de transmission (8) lorsque le dispositif d'embrayage est débrayé.

10. Aéronef (1) comprenant une porte coulissante et un système (3) selon l'une quelconque des revendications 1 à 9 relié à la porte coulissante (2).

**Patentansprüche**

1. System (3) zur Steuerung der Bewegungsgeschwindigkeit einer Schiebetür (2) für Luftfahrzeuge (1), umfassend eine elektromagnetische Bremsvorrichtung (4) der Tür, die eine Antriebswelle (8) und elektromagnetische Widerstandsmittel (18) aufweist, und Verbindungsmittel (5), die dazu bestimmt sind, mit der Schiebetür verbunden zu sein und mit der Antriebswelle zusammenzuwirken, sodass, wenn sich die Schiebetür in eine vorbestimmte Richtung bewegt, die Verbindungsmittel die Antriebswelle antreiben und die elektromagnetischen Widerstandsmittel ein Widerstandsmoment (Cr) auf die Antriebswelle ausüben, um die Bewegungsgeschwindigkeit der Tür zu steuern, da die Widerstandsmittel nicht von einer externen Energiequelle versorgt werden,

**dadurch gekennzeichnet, dass** die Widerstandsmittel ein Steuergesetz aufweisen, das einen ersten Dämpfungswert mit einer ersten Geschwindigkeitsschwelle (V1) der Bewegungsgeschwindigkeit der Tür (2) und einen zweiten Dämpfungswert mit einer zweiten Geschwindigkeitsschwelle (V2) der Bewegungsgeschwindigkeit der Tür, die höher ist als die erste Geschwindigkeitsschwelle (V1), verbindet, wobei die Widerstandsmittel das Widerstandsmoment (Cr) auf die Antriebswelle ausüben, das gleich einem ersten Drehmoment gleich dem ersten Dämpfungswert multipliziert mit der Differenz zwischen der Bewegungsgeschwindigkeit der Tür und der ersten Geschwindigkeitsschwelle (V1) ist, wenn die Bewegungsgeschwindigkeit größer als die erste Geschwindigkeitsschwelle (V1) ist, und das Widerstandsmoment ausüben, das gleich der Summe des ersten Drehmoments und eines zweiten Drehmoments gleich dem zweiten Dämpfungswert multipliziert mit der Differenz zwischen der Bewegungsgeschwindigkeit der Tür und der zweiten Geschwindigkeitsschwelle (V2) ist, wenn die Bewegungsgeschwindigkeit größer als die zweite Geschwindigkeitsschwelle (V2) ist.

2. System nach Anspruch 1, wobei die Widerstandsmittel einen Generator (18), der mit der Antriebswelle (8) verbunden und so konfiguriert ist, dass er das Widerstandsmoment (Cr) ausübt, und Steuermittel (19) des Generators umfasst, die von dem Generator gespeist werden und das Steuergesetz aufweisen.

3. System nach Anspruch 2, wobei die Steuermittel (19) Verlustmittel (23) umfassen, die ein erstes elektrisches ohmsches Mittel (18, 33), ein zweites elektrisches ohmsches Mittel (18, 34) und Schaltmittel (35) umfassen, die so konfiguriert sind, dass sie das erste ohmsche Mittel mit den Klemmen des Generators (18) verbinden, wenn die von dem Generator erzeugte elektrische Spannung gleich einer ersten vorbestimmten Spannungsschwelle ist, die auf den ersten Geschwindigkeitswert (V1) hinweist, und das zweite ohmsche Mittel mit den Klemmen des Generators verbinden, wenn die von dem Generator erzeugte elektrische Spannung gleich einer zweiten vorbestimmten Spannungsschwelle ist, die auf den zweiten Geschwindigkeitswert (V2) hinweist, wobei das erste ohmsche Mittel so konfiguriert ist, dass, wenn es mit dem Generator verbunden ist, der Generator das Widerstandsmoment (Cr) ausübt, das dem ersten Drehmomentwert (C1) an der Antriebswelle (8) entspricht, und das zweite ohmsche Mittel so konfiguriert ist, dass, wenn es mit dem Generator verbunden ist, der Generator das ohmsche Drehmoment (Cr) auf die Antriebswelle ausübt, das der Summe des ersten Drehmomentwerts (C1) und des zweiten Drehmomentwerts (C2) entspricht.

4. System nach Anspruch 3, wobei die Schaltmittel (35) einen ersten Schalter (36) und erste Steuermittel (38), die so konfiguriert sind, dass sie den ersten Schalter schließen, wenn die Spannung an den Klemmen des ersten Schalters größer oder gleich der ersten vorbestimmten Spannungsschwelle ist, um das erste ohmsche Mittel (33) mit den Klemmen des Generators (18) zu verbinden, und einen zweiten Schalter (37) und zweite Steuermittel (39) umfassen, die so konfiguriert sind, dass sie den zweiten Schalter schließen, wenn die Spannung an den Klemmen des zweiten Schalters größer oder gleich der zweiten vorbestimmten Spannungsschwelle ist, um das zweite ohmsche Mittel mit den Klemmen des Generators zu verbinden, wenn die Spannung an den Klemmen des zweiten Schalters größer oder gleich der zweiten vorbestimmten Spannungsschwelle ist.

5. System nach Anspruch 4, wobei mindestens die ersten Steuermittel (38) oder die zweiten Steuermittel (39) ferner so konfiguriert sind, dass sie den mit den Mitteln verbundenen Schalter (36, 37) schließen, wenn die Spannung an den Klemmen des Schalters größer oder gleich einer dritten vorbestimmten Spannungsschwelle ist, wobei die Steuermittel einen Auswahlschalter (48) aufweisen, der so konfiguriert ist, dass er den Schalter gemäß der mit den ersten oder zweiten Mitteln verbundenen vorbestimmten Spannungsschwelle oder gemäß der dritten Spannungsschwelle steuert.

6. System nach einem der Ansprüche 2 bis 5, wobei der Generator (18) eine elektrische Drehmaschine ohne Bürste oder eine elektrische Drehmaschine mit Bürste umfasst, wobei die Bremsvorrichtung (4) ferner eine Kupplungsvorrichtung (12) umfasst, die die Verbindungsmittel mit der Antriebswelle (8) verbindet, so dass die Kupplungsvorrichtung eingekuppelt ist, wenn sich die Tür (2) in die vorbestimmte Richtung bewegt, und ausgekuppelt ist, wenn sich die Tür in eine andere Richtung bewegt.

7. System nach Anspruch 6, wobei, wenn der Generator (18) eine elektrische Drehmaschine ohne Bürste umfasst, die Steuermittel (19) ferner einen passiven Spannungsgleichrichter (22) umfassen, der die elektrische Drehmaschine ohne Bürste mit den Schaltmitteln (35) verbindet.

8. System nach Anspruch 6, wobei, wenn der Generator eine elektrische Drehmaschine mit Bürste umfasst, die Steuermittel (19) ferner eine Diode (48) umfassen, die eine Klemme (31) der Maschine mit den Schaltmitteln (35) verbindet, sodass die elektrische Drehmaschine die Steuermittel speist, wenn sich die Tür in die vorbestimmte Richtung bewegt.

9. System nach einem der Ansprüche 6 bis 8, wobei die Verbindungsmittel einen Gurt (5) umfassen, wobei die Bremsvorrichtung (4) ferner eine Rückstellfeder (14) umfasst, die so konfiguriert ist, dass sie den Gurt um die Antriebswelle (8) wickelt, wenn die Kupplungsvorrichtung ausgekuppelt ist.

10. Luftfahrzeug (1), umfassend eine Schiebetür und ein System (3) nach einem der Ansprüche 1 bis 9, das mit der Schiebetür (2) verbunden ist.

**Claims**

1. System (3) for controlling the speed of movement of a sliding door (2) for an aircraft (1)) comprising an electromagnetic device (4) for braking the door including a transmission shaft (8) and electromagnetic resistive means (18), and connecting means (5) intended to be connected to the sliding door and cooperating with the transmission shaft so that, when the sliding door moves in a predetermined direction, the connecting means drive the transmission shaft and the electromagnetic resistive means apply a resistive torque (Cr) to the transmission shaft to control the speed of movement of the door, they resistive means not being supplied by an external energy source, **characterized in that** the resistive means include a control law connecting a first damping value to a first speed threshold (V1) of door movement speed (2), and a second damping value to a second speed threshold (V2) of door movement speed greater than the first speed threshold (V1), the resistive means applying the resistive torque (Cr) to the transmission shaft equal to the first torque equal to the first damping value multiplied by the difference between the speed of movement of the door and the first speed threshold (V1) when the speed of movement is greater than the first speed threshold (V1), and apply the resistive torque equal to the sum of the first torque and a second torque equal to the second damping value multiplied by the difference between the speed of movement of the door and the second speed threshold (V2) when the travel speed is greater than the second speed threshold (V2).

2. The system according to claim 1, wherein the resistive means comprise a generator (18) connected to the transmission shaft (8) and configured to apply the resistive torque (Cr), and means (19) for controlling the generator powered by the generator and including the control law.

3. The system according to claim 2, wherein the control means (19) comprise dissipation means (23) comprising a first electrical resistive means (18, 33), a second electrical resistive means (18, 34), and switching means (35) configured to connect the first resistive means to the terminals of the generator (18) when the electrical voltage produced by the generator is equal to a predetermined first voltage threshold indicative of the first speed value (V1) and also to connect the second resistive means to the terminals of the generator when the electrical voltage produced by the generator is equal to a predetermined second voltage threshold indicative of the second speed value (V2), the first resistive means being configured so that, when it is connected to the generator, the generator applies the resistive torque (Cr) equal to the first torque value (C1) on the transmission shaft (8), and the second resistive means being configured so that, when it is connected to the generator, the generator applies the resistive torque (Cr) on the transmission shaft equal to the sum of the first torque value (C1) and the second torque value (C2).

4. The system according to claim 3, wherein the switching means (35) comprise a first switch (36) and first control means (38) configured to close the first switch when the voltage at the terminals of the first switch is higher than or equal to the predetermined first voltage threshold so as to connect the first resistive means (33) to the terminals of the generator (18), and a second switch (37) and second control means (39) configured to close the second switch when the voltage at the terminals of the second switch is higher than or equal to the predetermined second voltage threshold so as to connect the second resistive means to the terminals of the generator when the voltage at the terminals of the second switch is higher than or equal to the predetermined second voltage threshold.

5. The system according to claim 4, wherein at least the first control means (38) or the second control means (39) are further configured to close the switch (36, 37) associated with said means when the voltage at the terminals of said switch is higher than or equal to a predetermined third voltage threshold, said control means including a selection switch (48) configured to control said switch according to the predetermined voltage threshold associated with said first or second means or according to the third voltage threshold.

6. The system according to any one of claims 2 to 5, wherein the generator (18) comprises a brushless rotating electric machine or a brushed rotating electric machine, the braking device (4) further comprises a clutch device (12) connecting the connecting means to the transmission shaft (8) so that the clutch device is engaged when the door (2) moves in the predetermined direction and is disengaged when the door moves in another direction.

7.  The system according to claim 6, wherein if the generator (18) comprises a brushless rotating electric machine, the control means (19) further comprise a passive voltage rectifier (22) connecting the brushless rotating electric machine to the switching means (35).

8.  The system according to claim 6, wherein if the generator comprises a brushed rotating electric machine, the control means (19) further comprise a diode (48) connecting a terminal (31) of said machine to the switching means (35) so that the rotating electric machine powers the control means when the door moves in the predetermined direction.

9.  The system according to any one of claims 6 to 8, wherein the connecting means comprise a strap (5), the braking device (4) further comprising a return spring (14) configured to wind the strap around the transmission shaft (8) when the clutch device is disengaged.

10. An aircraft (1) comprising a sliding door and a system (3) according to any one of claims 1 to 9 connected to the sliding door (2).

EP 4 463 373 B1

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

## RÉFÉRENCES CITÉES DANS LA DESCRIPTION

**Documents brevets cités dans la description**

- FR 3072707

- EP 3747760 A